# EUROPEAN PATENT APPLICATION

(11) **EP 1 646 129 A1**
(43) Date of publication of application: **12.04.2006**
(21) Application number: 04772694.8
(22) Date of filing: 02.09.2004
(51) Int. Cl.: H02K 7/14

(54) **MOTOR WITH ECCENTRIC PART AND PUMP DEVICE USING THE SAME**

(30) Priority: 02.09.2003 JP 2003310446
(71) Applicant: Bosch Corporation, Shibuya-ku Tokyo 150-8360 (JP)
(72) Inventor: OYAMA, Makio; c/o BOSCH CORPORATION, Yokohama-shi, Kanagawa, 224-8501 (JP); ATSUSHI, Hiroaki c/o BOSCH CORPORATION, Yokohama-shi, Kanagawa, 224-8501 (JP); SAITOH, Manabu c/o BOSCH CORPORATION, Yokohama-shi, Kanagawa, 224-8501 (JP)
(74) Representative: Hallam, Arnold Vincent
(86) International application number: PCT/JP2004/012740
(87) International publication number: WO 2005/025033

(57) **Abstract**

In the present invention, without forming a rotational shaft (30) per se in an eccentric manner, the eccentric structure is provided to the whole structure including a ball bearing (50). Accordingly, in place of cutting a side of the rotational shaft (30), the eccentric ball bearing (50) is joined to a shaft portion of the straight rotational shaft (30) so as to obtain an eccentric portion. That is, the eccentric portion is constituted of the shaft portion which has an axis aligned with an axis of the rotational shaft (30) and the eccentric ball bearing (50) which is joined to the shaft portion. As the eccentric ball bearing, it is optimum to adopt a mode in which an inner side thereof having a smaller diameter is formed in an eccentric manner. The eccentric ball bearing (50) is constituted of an inner lace (52) which is arranged eccentric with respect to the axis of the rotational shaft (30), an outer lace (54) which surrounds an outside of the inner lace (52) and balls (55) which are supported between the outer lace (54) and the inner lace (52).

## Description

### Technical Field

The present invention relates to a motor having an eccentric portion which includes a rotational shaft which has an axis and supports an armature and a commutator thereon, and an eccentric portion which is eccentrically configured with respect to the axis on the rotational shaft, wherein the eccentric portion constitutes an output portion for driving an external equipment such as a pump in a hydraulic brake system of an automobile, for example. Further, the present invention also relates to a pump device which uses such a motor.

### Background Art

Since this type of motor or pump device is mounted on the automobile, it is desirable that the motor or the pump is miniaturized and vibrations and operation sounds thereof are reduced.

To focus on the eccentric portion of the motor, conventionally, a rotational shaft is machined so as to form an eccentric shaft portion on a portion thereof, and a needle bearing or a ball bearing is joined to an outer periphery of the eccentric shaft portion. The needle bearing withstands a high load compared to the ball bearing. However, the ball bearing is disadvantageous in the miniaturization and the reduction of weight of the motor or the reduction of the vibrations and operation sounds of the motor. For example, patent literature 1 discloses a motor which uses the needle bearing and patent literature 2 discloses a motor which uses a ball bearing.
[Patent Literature 1] JP-A-11-252854
[Patent Literature 2] JP-A-2000-278904

### Disclosure of the Invention

### Task to be solved by the Invention

According to the present invention, while focusing their attentions to a current situation in which a diameter of a pump or the like which is driven by way of an eccentric portion is made small and a weight of the pump is reduced, inventors have extensively studied an effective use of a ball bearing which is relatively suitable for a low load.

As a result, the inventors have found that, conventionally, there has been mainly adopted a design concept that, to obtain the eccentric portion, a portion of the rotational shaft is eliminated by applying cutting to a portion of the rotational shaft thus forming an eccentric shaft portion in the eliminated portion. It is inevitable that such shaft cutting pushes up a cost. Accordingly, the inventors have challenged a unique idea that instead of forming the rotational shaft per se in an eccentric manner, the eccentric structure is provided to the whole structure including the ball bearing.

### Means for solving the problem

According to the present invention, an eccentric portion formed on a rotational shaft is constituted as follows. That is, in place of cutting a side of a rotational shaft, an eccentric ball bearing is directly joined to a shaft portion which is constituted of a portion of the straight rotational shaft so as to obtain an eccentric portion. In other words, the eccentric portion is constituted of a shaft portion (portion of the rotational shaft) having an axis equal to an axis of the rotational shaft and the eccentric ball bearing which is joined to the shaft portion. It is most preferable that an inner side of the eccentric ball bearing having a smaller diameter is formed in an eccentric configuration. This is because that compared to a case in which an outer side of the eccentric ball bearing is formed in an eccentric configuration, the above-mentioned provision is advantageous in view of the machining of parts as well as a strength of the eccentric ball bearing. The eccentric ball bearing is constituted of an inner lace which is arranged eccentric with respect to the axis of the rotational shaft, an outer lace which is positioned outside the inner lace and has an axis equal to the above-mentioned axis, and balls which are supported between the outer lace and the inner lace.

On the rotational shaft having such an eccentric portion, an armature including a coil winding portion, a commutator for supplying electricity to the armature, and the eccentric portion which constitutes an output portion are arranged in this order. The eccentric portion is served for driving a pump for a hydraulic brake system of an automobile (an automatic brake served not only for a usual anti-skid control but also for a traction control and, further, for the safe traveling, the collision prevention and the like). Accordingly, in a usual case, the armature and the commutator are housed in a motor housing and the motor housing is mounted on one side of a control unit of the hydraulic brake system.

The ball bearing has the simple constitution compared to a needle bearing (for example, while a stop bushing which supports a side is necessary in the needle bearing, the stop bushing is unnecessary in the ball bearing) and hence, frictions are small whereby a motor current is low. Further, structurally, a length of the ball bearing in the rotational axis direction is short and, at the same time, the ball-bearing becomes light-weighted (particularly, a mass of the eccentric portion becomes light-weighted) and hence, the vibrations and noises can be suppressed.

When the eccentric ball bearing is joined to the shaft portion which constitutes a portion of the straight rotational shaft as in the case of this embodiment, to take the effectiveness of the product into consideration from a viewpoint of durability and the like, it is necessary to reduce an output of the motor. According to an experiment, it is preferable to restrict the output of the motor to 150W or below, or it is preferable to apply the present invention to such an output. In this respect, as an external equipment such as a pump which is driven by way of the eccentric portion, it is necessary to select a low-load equipment such as a small-diameter pump or to miniaturize a motor per se.

Further, when the present invention is grasped in a form of a pump device, the pump device is configured such that the above-mentioned particular motor is used as a drive source and a plunger is brought into contact with an outer periphery of the eccentric ball bearing (that is, an outer lace of the eccentric ball bearing). The pump device, along with a linear reciprocal motion of the plunger, repeats sucking and discharging of a working liquid. The plungers are usually provided in a pair and are arranged at positions which are spaced apart from each other by 180° in the circumferential direction of the eccentric ball bearing.

### Brief Explanation of the Drawing

Fig. 1 is a front view of a profile of an embodiment of a motor according to the present invention.
Fig. 2 is a cross-sectional structural view of the motor shown in Fig. 1.
Fig. 3 is a side view showing one example of an eccentric ball bearing.
Fig. 4 is a cross-sectional view taken along a line 4-4 of Fig. 3.

### Explanation of symbols

- 10:: motor
- 12:: motor housing
- 30:: rotational shaft
- 50:: eccentric ball bearing
- 52:: inner lace
- 54:: outer lace
- 55:: ball
- 70:: armature
- 80:: commutator
- 100:: plunger pump

### Best Mode for Carrying out the Invention

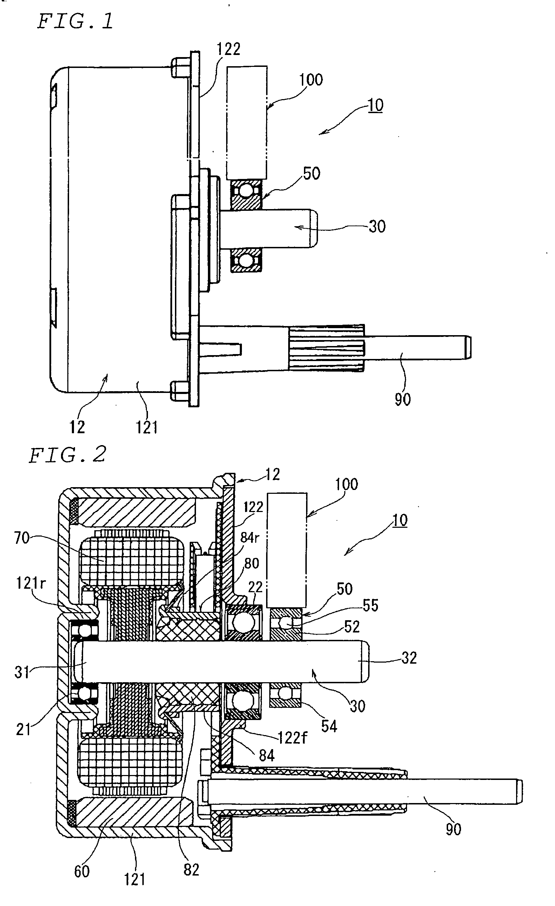

Although the present invention is basically directed to a motor which has a specific eccentric portion, those who are skilled in the art will understand that the invention is applicable to a pump device which uses the motor as a drive source.
To explain the present invention in conjunction with Fig. 1 and Fig. 2, the DC motor 10 includes a motor housing 12 which defines a columnar inner space therein. A height of the motor housing 12 is approximately half of a diameter of the motor housing 12. The motor housing 12 is constituted of a housing body 121 having a U-shape cross section and an end plate 122 which closes one end of the housing body 121. A flange portion 122f which is flared outwardly is formed on a center portion of the end plate 122. Further, a receiving portion 121r is formed on a center portion of the housing body 121 by press forming. To miniaturize the motor 10, the receiving portion 121r has a height equal to heights of other portions of the housing body 121 (that is, coplanar). The inside of the receiving portion 121r and the inside of the flange portion 122f form portions which support first and second bearings 21, 22. These two bearings 21, 22 are integrally formed with the motor housing 12 and such a constitution rotatably supports a rotational shaft 30 of the motor 10. The rotational shaft 30 is positioned at a center portion of the motor housing 12, wherein one end of the rotational shaft 30 is supported on the first bearing 21 arranged inside the receiving portion 121r of the housing body 121, an opposite side of the rotational shaft 30 has a midst portion thereof supported on the second bearing 22, and a portion of the rotational shaft 30 projecting from the second bearing 22 penetrates the end plate 122 and projects to the outside of the motor housing 12.

Here, the rotational shaft 30 is formed of a straight so-called round bar which extends from a first end portion 31 on a side supported by the first bearing 21 to a second end portion 32 on a side projected to the outside. That is, the rotational shaft 30 has an equal axis over a total length thereof from the first end portion 31 to the second end portion 32. According to the present invention, on the rotational shaft 30 which is straight over the whole length, an eccentric ball bearing 50 is joined to and supported on a shaft portion which is positioned at an outside portion of the motor housing 12.

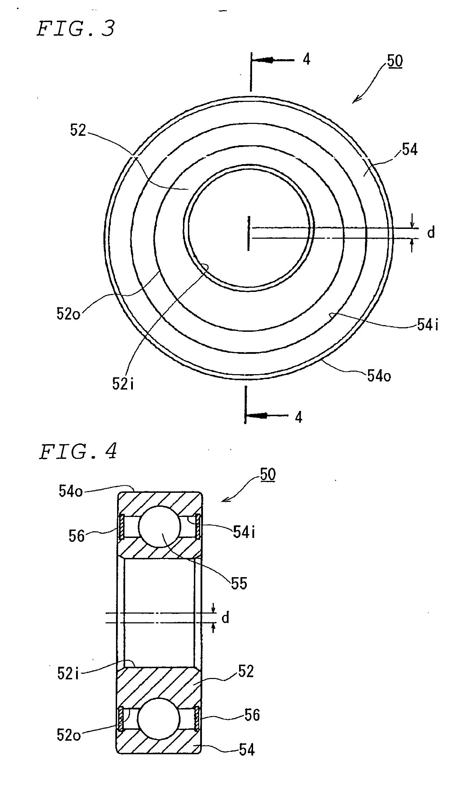

Fig. 3 and Fig. 4 clearly show the eccentric ball bearing 50. The eccentric ball bearing 50 is constituted of an eccentric inner lace 52, an outer lace 54 which surrounds an outside of the inner lace 52, and a plurality of balls 55 which are positioned between the inner lace 52 and the outer lace 54. The respective balls 55 are arranged in the circumferential direction between the inner lace 52 and the outer lace 54 and retainers 56 at both sides retain the balls 55. Accordingly, the basic constitutional elements per se of the eccentric ball bearing 50 are substantially equal to the basic constitutional elements of a usual ball bearing. However, while the center of an inner-peripheral-side circle 54i and the center of an outer-peripheral-side circle 54o are equal with respect to the outer lace 54, the center of an inner-peripheral-side circle 52i and the center of an outer-peripheral-side circle 52o are eccentric from each other by a distance d with respect to the inner lace 52. The eccentric distance (that is, eccentricity) is, for example, slightly less than 1mm. Accordingly, when the eccentric ball bearing 50 including the inner lace 52 is joined to the shaft portion of the rotational shaft 30 in a close fit state, along with the rotation of the rotational shaft 30, the eccentric portion including the eccentric ball bearing 50 performs a reciprocal linear motion with a stroke of a size of 2d in the direction perpendicular to the axis of the rotational shaft 30. Due to such a motion, it is possible to drive a plunger pump 100. With respect to the plunger pump 100 per se, as described in JP-A-7-224755, for example, a plunger is brought into contact with an outer periphery of the eccentric ball bearing 50 and, in response to the reciprocal linear motion of the eccentric ball bearing 50, the plunger per se also performs the similar reciprocal linear motion thus generating a pumping action.

Here, to focus on the inside of the motor housing 12 (see Fig. 2), first of all, a plurality of magnets 60 is mounted on an inner peripheral wall surface of the housing body 121 having a U-shaped cross section. The respective magnets 60 generate a magnetic field together with the housing body 121 which functions as a yoke. Further, an armature 70 is arranged in an inner space surrounded by the magnets 60. The armature 70 includes a stacked core and a coil winding portion which is wound around the laminated core. The armature 70 per se is integrally supported on the rotational shaft 30 and is rotated together with the rotational shaft 30. Due to a cooperative action of an electric current which flows the coil winding portion of the armature 70 and the magnetic field which is generated by the magnet 60, a given force acts on the armature 70 and the force generates a rotating force of the motor 10.

Since the electricity is supplied to the rotating armature 70 from the outside, a commutator 80 is arranged at a portion adjacent to the armature 70. The commutator 80 is integrally supported on the rotational shaft 30 between the armature 70 and a second bearing 22. The commutator 80 includes a cylindrical insulation ring 82 which is formed of a resin molded product and a plurality of commutator members 84 which are assembled to an outer periphery of the insulation ring 82. The insulation ring 82 is made of an electrically insulating resin material, while a plurality of commutator members 84 are made of a conductive metallic material such as copper. A riser 84r which is formed by folding one end of the commutator members 84 is a portion which catches respective commutator members 84 and end portions of coils of the respective coil winding portions of the armature 70. The commutator 80 is connected with an external circuit along with a brush for supplying electricity. A cable 90 which is extended from a lower portion of the motor housing 12 is provided for connecting the brush and the external circuit for supplying electricity.

In this motor 10 which uses the eccentric ball bearing 50, to realize the miniaturization of the motor 10, particularly, to realize the reduction of a length of motor 10 in the direction of the rotational shaft 30, the armature 70 is formed in a state that a center portion thereof is recessed and respective parts of the first bearing 21 and the commutator 80 which are arranged close to the recessed portion are inserted into the recessed portions.

## Claims

1. A motor having an eccentric portion including a rotational shaft which has an axis and supports an armature and a commutator thereon, and an eccentric portion which is eccentrically configured with respect to the axis on the rotational shaft, the eccentric portion constituting an output portion for driving an external equipment, wherein
the eccentric portion includes a shaft portion of the rotational shaft which has an axis equal to the axis, and an eccentric ball bearing which is joined to the rotational shaft and has another axis which is eccentric with respect to the axis of the rotational shaft and the shaft portion.

2. A motor according to claim 1, wherein the eccentric ball bearing is constituted of an inner lace which is eccentric with respect to the axis of the rotational shaft and the shaft portion, an outer lace which is positioned outside the inner lace and has an axis equal to the axis of the rotational shaft and the shaft portion, and balls which are supported between the outer lace and the inner lace.

3. A motor according to claim 1 or 2, wherein the eccentric ball bearing is jointed to a portion of the rotational shaft in a close fit state.

4. A motor according to claim 1 or 2, wherein the armature, the commutator and the eccentric portion are arranged on the axis in the order.

5. A motor according to claim 1 or 2, wherein the motor has an output of 150W or less.

6. A pump device including a rotational shaft which has an axis and supports an armature and a commutator thereon, an eccentric portion which is eccentrically configured with respect to the axis on the rotational shaft, and a plunger pump which is brought into contact with the eccentric portion and is driven by an eccentric motion of the eccentric portion, wherein
the eccentric portion includes a shaft portion of the rotational shaft which has an axis equal to the axis, and an eccentric ball bearing which is joined to the shaft portion of the rotational shaft and has another axis which is eccentric with respect to the axis of the rotational shaft and the shaft portion.

7. A pump device according to claim 6, wherein the eccentric ball bearing is constituted of an inner lace which is eccentric with respect to the axis of the rotational shaft and the shaft portion, an outer lace which is positioned outside the inner lace and has an axis equal to the axis of the rotational shaft and the shaft portion, and balls which are supported between the outer lace and the inner lace.

8. A pump device according to claim 6 or 7, wherein the eccentric ball bearing is jointed to a portion of the rotational shaft in a close fit state.
